# FASCICULE DE BREVET EUROPEEN

(11) **EP 0 736 791 B1**
(45) Date de publication et mention de la délivrance du brevet: **02.07.2003**
(21) Numéro de dépôt: 96400724.9
(22) Date de dépôt: 04.04.1996
(51) Int. Cl.: G02F 1/015, G02F 1/21

(54) **Dispositif photoréfractif à puits quantiques**
Photorefraktives Quantentopfbauelement
Quantum well photorefractive device

(30) Priorité: 07.04.1995 FR 9504168
(43) Date de publication de la demande: 09.10.1996
(73) Titulaire: FRANCE TELECOM, 75015 Paris (FR)
(72) Inventeur: Lambert, Bertrand, 22300 Lannion (FR); Le Corre, Alain, 22560 Pleumeur Bodou (FR); Gravey, Philippe, 22300 Lannian (FR)
(74) Mandataire: Texier, Christian

(56) Documents cités:
- EP-A- 0 638 831
- WO-A-92/22847
- APPLIED PHYSICS LETTERS, 19 JULY 1993, USA, vol. 63, no. 3, ISSN 0003-6951, pages 296-298, XP000382576 CHEUNG S ET AL: "High contrast Fabry-Perot optical modulator using quantum confined Stark effect tuning in InGaAs-GaAs multiple quantum well cavity"

## Description

La présente invention concerne le domaine des dispositifs photoréfractifs.

Par dispositifs "photoréfractifs" on entend les dispositifs dans lesquels est susceptible de se manifester l'effet photoréfractif, c'est-à-dire la création d'un champ de charge d'espace résultant de la photo-excitation de porteurs de charge redistribués de façon inhomogène sous l'effet d'un éclairement inhomogène, tel qu'une figure d'interférence.

On pourra trouver des explications sur cet effet photoréfractif dans les documents suivants :
(1) L'effet photoréfractif, David PEPPER, Jack FEINBERG, Nicolai KUKHTAREV, Pour La Science, n° 158, décembre 1990, pages 58 à 64.
(2) Topics in Applied Physics, Springer Verlag, vol. 61, Photorefractive materials and their applications, Tome 1, Chapitre 8, The Photorefractive Effect in Semiconductors, Alastair M. Glass and Jefferson Strait.

De nombreux dispositifs photoréfractifs ont déjà été proposés.

En particulier, on a déjà proposé plusieurs dispositifs photoréfractifs à base de structures à puits quantiques multiples (MQW - multiple quantum wells en anglais).

On sait que les composants basés sur les propriétés des puits quantiques multiples sont très prometteurs dans le domaine du traitement du signal optique.

Le spectre d'absoption optique de puits quantiques multiples permet d'observer une raie excitonique à température ambiante. Cette propriété est remarquable par rapport aux matériaux massifs et correspond au fait que l'exciton est confiné dans les puits par les barrières. De même, l'application d'un champ électrique perpendiculaire (QCSE-quantum confined Stark effet en anglais) aux interfaces permet de déplacer la résonance excitonique vers les basses énergies. Au contraire, dans un semiconducteur massif, l'application d'un champ électrique n'entraîne pas une variation importante d'absorption.

Dans les structures à puits quantiques multiples, la présence de l'exciton à température ambiante permet d'observer des non-linéarités très fortes au voisinage de la résonance excitonique.

Différents dispositifs utilisant ces propriétés des structures à puits quantiques multiples ont été proposés (tels que par exemple modulateur spatial de lumière ou spatial light modular-SLM en anglais, modulateur sensible à la phase ... et des dispositfs photoréfractifs).

Pour ce qui est des dispositifs photoréfractifs à base de structure à puits quantiques multiples, pour la commutation optique, on peut par exemple se référer au document :
(3) FR-A-2678093.
(4)EP-A-0638831. Ce dernier document décrit un dispositif photoréfractif à puits quantiques multiples. Il évoque également la possibilité de disposer une couche réfléchissante entre le substrat et le dispositif photoréfractif proprement dit, pour éviter le retrait du substrat par attaque chimique, en raison des propriétés absorbantes du substrat.

On notera qu'il convient de bien distinguer les dispositifs photoréfractifs comprenant une zone active encadrée de part et d'autre par des zones de piégeage et des dispositifs dits à effet photoréfractif, tels que décrits par exemple dans le document (5) APPLIED PHYSICS LETTERS, vol. 63, n° 3, qui procèdent à l'accord par variation d'indice. En effet, de telles structures ne comprennent pas de zone de piégeage et ne peuvent par conséquent former un dispositif photoréfractif tel que défini ci-dessus.

Par ailleurs, on sait que les réseaux de diffraction rapides, sont bien adaptés pour la commutation optique rapide.

Sur ce point on peut se référer au document :
(6) Demande de brevet déposée en France le 17 Novembre 1993 sous le n° 93 13718 "Cellule Photoréfractive, N. Pelekanos, B. Deveaud et B. Lambert.

Grâce à des temps de transit très courts (de l'ordre de la picoseconde pour des puits quantiques multiples judicieusement choisis et pour des épaisseurs de l'ordre du micron) on peut atteindre des temps de réponse très courts. De ce fait, il est possible de concevoir un système du commutation rapide (de l'ordre de 100-200 ns) adapté aux transmissions par paquets (par exemple de type ATM). La commutation se fait sur un réseau de diffraction photo-inscrit dans la structure à puits quantiques multiples. De façon à garder le réseau inscrit pendant le temps du paquet ATM (durée de l'ordre de la micro-seconde) il est nécessaire de fixer les charges à l'extérieur de la structure à puits quantiques multiples dans des zones de piégeage (semi-isolants classiques ou boîtes quantiques fortement enterrées). L'efficacité de diffraction d'un tel ensemble est de l'ordre de 1%.

Sur ce point on peut se référer par exemple aux documents suivants :
(7) A. Partovi et coll. Appl. Phys. Lett. 62, 464 (1993) "Cr-doped GaAs/AlGaAs semi-insulating multiple quantum well photorefractive devices".
(8) S.R. Bowman et coll. Appl. Phys. Lett. 65 956 (1994) "High-resolution spatial light modulators using GaAs/AlGaAs multiple quantum wells".

L'un des inconvénients des dispositifs décrits ci-dessus réside dans leur faible rendement et efficacité de diffraction, de l'ordre de 1%.

Le rendement est défini par le rapport de l'intensité diffractée sur l'intensité incidente. L'efficacité de diffraction est égale au rapport de l'intensité diffractée sur l'intensité transmise.

On a certes déjà tenté d'améliorer cette situation.

Par exemple, le document :
(9) J. Krawczak et coll. Optics Lett. 15 1264 (1960) "Diffraction efficiency gain, blazing, and apodizing of a symmetric square reflection grating in an étalon" a proposé d'associer un réseau ayant une faible efficaticté de diffraction et un étalon commercial de type Gires-Tournois.

Le document (7) pécité a ainsi démontré qu'il est possible de gagner un ordre de grandeur sur l'efficacité de diffraction.

Néanmoins, pour l'instant, cette démonstration et restée à l'échelle d'une expérience de Laboratoire. Les Spécialistes n'ont pas réussi à transposer cette structure de laboratoire à l'échelle industrielle.

Récemment le document suivant :
(10) D.D. Nolte Optics Lett. 19, 819 (1994) "Dynamic holographic phase gratings in multiple-quantum-well assymetric Fabry-Perot reflection modulators" a proposé une structure extrêmement simplifiée où en utilisant deux couches de tampons appropriés (buffers) il compense la différence de phase de π entre la réflexion buffer-métal et air-buffer. La simulation prévoit une efficacité de diffraction de seulement 1%.

La présente invention a maintenant pour but de perfectionner les dispositifs photoréfractifs connus.

Un but important de la présente invention est de proposer un dispositif photoréfractif présentant un rendement et une efficacité supérieur à ceux des dispositifs de la technique antérieure.

Ces buts sont atteints selon la présente invention grâce à un dispositif photoréfractif comprenant une zone optiquement active formée de puits quantiques multiples et de zones de piégeage de part et d'autre de la zone optiquement active, caractérisé par le fait qu'il comprend deux réflecteurs disposés respectivement sur l'extérieur des zones de piégeage pour former une cavité optique.

Selon une autre caractéristique avantageuse de l'invention, les deux réflecteurs possédent des pourcentages de réflexion différents.

Le cas échéant, mais non limitativement, l'un des deux réflecteurs peut être un réflecteur de Bragg distribué.

Selon une autre caractéristique avantageuse de la présente invention, la zone active de puits quantiques multiples et le réflecteur de Bragg distribué sont réalisés par epitaxie par jets moléculaires. Cependant ces structures peuvent être réalisées par toute autre technique d'épitaxie.

D'autres caractéristiques, buts et avantages de la présente invention apparaîtront à la lecture de la description détaillée qui va suivre, et en regard du dessin annexé donné à titre d'exemple non limitatif et sur lequel la figure unique annexée représente une vue schématique en coupe verticale d'un dispositif photoréfractif conforme à un mode de réalisation préférentiel de la présente invention.

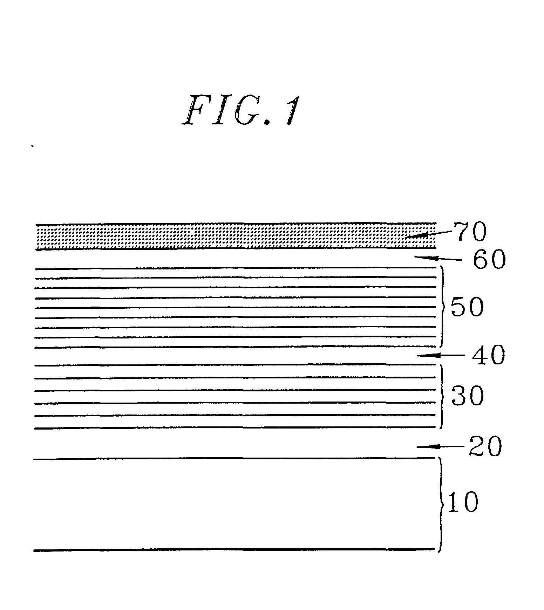

Le dispositif photoréfractif représenté sur la figure 1 annexée comprend successivement :
- un substrat 10,
- une couche tampon 20,
- un réflecteur de Bragg distribué 30,
- une première couche de piégeage 40,
- une zone à puits quantiques multiples 50,
- une seconde couche de piégeage 60, et
- une métallisation supérieure 70.

Cette structure de dispositif photoréfractif est de préférence réalisée à l'aide d'un bâti d'épitaxie par jets moléculaires utilisant les éléments (P et As) de la colonne V ou d'autres éléments similaires, tels que les éléments In et Ga de la colonne III sous forme de gaz (GSMBE).

Comme on le précisera par la suite, le composant peut être réalisé en utilisant les moyens classiques de la technologie : photolithographie pour la réalisation de structures "mésa" et/ou dépôt de diélectrique.

Le substrat 10 est de préférence un substrat InP, par exemple de 250µm d'épaisseur. En variante, le substrat 10 peut être du GaAs, ou du InGaSb par exemple.

La couche tampon 20 est de préférence une couche InP, par exemple de 0,5µm d'épaisseur.

Le réflecteur de Bragg distribué 30 est constitué de paires de couches alternées de semi-conducteur ayant des différences d'indice les plus grandes possibles, de préférence de paires de couches alternées InP/Q_{1.45} d'épaisseur respective λ'/4 avec λ' = λ/n où n est l'indice moyen de la couche considérée (InP ou Q_{1.45}) et λ correspond à la longueur d'onde d'utilisation (soit par exemple de préférence 1,5µm).

La couche à "petit intervalle de bande interdite" du réflecteur 30 est constituée avantageusement d'un quaternaire Q ayant une longueur d'onde de coupure à environ 1,45µm. La réflectivité de ce réflecteur 30 dépend du nombre de paires de couche InP/Q_{1.45}. Ce nombre est ajusté en fonction de l'absorption dans la zone 50 à puits quantiques multiples.

Selon un mode de réalisation préférentiel, le réflecteur 30 comprend 13 paires de couches ayant une réflectivité d'environ 60%.

Une simulation montre que l'on obtient ainsi une efficacité de diffraction supérieue à 10% pour une réflectivité comprise entre 45 et 85%.

A titre d'exemple non limitatif, dans le réflecteur 30, les couches d'InP ont une épaisseur de l'ordre de 1220Å tandis que les couches de quaternaires ont une épaisseur de l'ordre de 1140Å.

Les zones de piégeages 40 et 60 situées de part et d'autre de la zone 50 ont pour fonction de piéger les charges extraites de cette zone 50 à puits quantiques multiples afin d'écranter le champ électrique extérieur.

Les zones de piégeage 40 et 60 peuvent faire l'objet de plusieurs variantes.

Selon une première variante, les zones de piégeage 40 et 60 peuvent être formées à base de matériaux InP semi-isolants : de l'InP dopé Fe (la concentration en ions Fe étant de l'ordre de 10¹⁷cm⁻³) pour la couche 60 afin de piéger les électrons et de l'InP : Fe, Si pour la couche 40 afin de piéger les trous de façon efficace à champ électrique élevé. Le cas échéant pour la couche 40, soit pour piéger les trous, on peut utiliser une couche InP : Ti, Be.

Selon une seconde variante, les zones de piégeage 40 et 60 peuvent être réalisées en utilisant des boîtes quantiques auto-assemblées (S.A.Q.D.). Pour ce faire il est nécessaire de pratiquer une interruption de croissance après le dépôt d'une couche bi-dimensionnelle (2D) d'InAs sur une couche InP : on obtient ainsi une croissance tri-dimensionnelle (3D) générée par la relaxation élastique du paramètre de maille de InAs fortement contraint sur InP. Les îlots sont fortement "enterrés" dans les couches d'InP de façon à ce que les porteurs restent piégés même à fort champ électrique.

Pour la bonne compréhension de cette configuration à "boîtes quantiques auto-assemblées", on pourra se référer par exemple au document :
(11) VIII Euro MBE Workshop, Sierra Nevada - Grenada, Mars 1995, "Growth by GSMBE and Characterization of InAs Islands on InP", A. Le Corre et al.

Les couches de piégeage 40 et 60 ont typiquement une épaisseur de l'ordre de 2400Å.

La zone 50 à puits quantiques multiples est constituée d'une succession de puits et de barrières. Les puits sont formés par exemple de composés ternaires InGaAs accordés au paramètre de maille du substrat InP 10. La largeur d'environ 80Å (par exemple 78Å) de chaque puits est ajustée de façon à avoir une résonance excitonique à 1,5µm à température ambiante.

Afin d'optimiser la variation de la résonance excitonique en fonction du champ électrique appliqué, les inventeurs ont fait croître d'autres zones 50 à puits quantiques multiples avec des quaternaires (Q) GaInAsP dans les puits.

Les barrières de la zone 50 sont de préférence en InP ou mieux en quaternaire (Q) GaInAsP ajusté de façon à avoir à la fois un confinement suffisant pour observer une résonance excitonique importante et un transport vertical (perpendiculaire aux interfaces) de façon à balayer les charges photocrées hors de la zone 50 en quelques picosecondes.

Selon le mode de réalisation préférentiel, la zone 50 possède des barrières en Q 1,18 d'une épaisseur de l'ordre de 65Å (c'est-à-dire ayant une longueur d'onde de coupure à 1,18µm).

Selon une variante, les inventeurs ont réalisé des barrières en AlInAs afin d'optimiser la zone 50. Grâce à l'introduction de l'Al dans les barrières le saut dans la bande de valence est minimisé.

L'ensemble de la zone à puits quantiques 50 est dopé avec des éléments de transition 3d (Fe, Ti) afin de piéger les porteurs photocrées en quelques dizaines de picosecondes. Il est ainsi possible de limiter la diffusion latérale (parallèle aux interfaces) des porteurs permettant d'augmenter le temps de maintien du réseau photoinscrit et de réduire le pas du réseau.

L'épaisseur totale de la zone 50 est un multiple de λ'/2.

La zone 50 peut comprendre par exemple 80 paires de couches alternées de puits et barrières.

La couche de métallisation supérieure 70 déposée sur la couche de piégeage 60, forme une électrode semi-transparente.

La structure illustrée sur la figure 1 et précédemment décrite, réalisée par épitaxie par jets moléculaires est ajustée pour travailler à environ 1,55µm.

La couche de piégeage 60 est dopée p+, tandis que les couches 10, 20, 30 et 40 sont dopées n+ pour appliquer un champ électrique perpendiculairement aux interfaces sur la zone 50.

Le faisceau incident (côté du substrat InP 10) tombe avec un angle d'environ 10°, on détecte le faisceau diffracté suivant une direction proche de la normale. L'efficacité de diffraction est supérieure à 10% pour une tolérance angulaire d'environ 5-6°.

La structure de dispositif photoréfractif conforme à la présente invention permet d'augmenter par au moins un ordre de grandeur l'efficacité de diffraction par rapport à l'état de la technique (et donc de passer à des efficacités de diffraction supérieures à 10%) et d'augmenter de façon conséquente le rendement de diffraction.

La cavité, conforme à la présente invention, comportant un réflecteur de Bragg distribué 30 permet entre autre, l'utilisation de puits quantiques multiples 50 de plus faible épaisseur que la technique antérieure, réduisant ainsi la tension appliquée.

Le mode de ce dispositif est suffisamment large angulairement pour maintenir la "résonance" sur plusieurs degrés. On peut donc envisager la commutation vers différentes fibres optiques.

Plusieurs procédés technologiques peuvent être utilisés pour réaliser le dispositif conforme à l'invention.

Selon une première variante, le dispositif peut comprendre des structures "mésa" réalisées par des procédés de photolithographie et des contacts métalliques annulaires afin d'obtenir une structure "photoconductrice". On obtient ainsi une pixelisation où chaque élément a un diamètre utile par exemple de 400µm.

Selon une seconde variante, afin d'éviter la pixelisation et d'obtenir un fort parallélisme, la zone 50 de puits quantiques multiples peut être enrobée seule entre une, voire deux couches de diélectrique. Cette dernère peut être constituée soit d'un matériau connu sous la désignation SOG (Spin Oxided Glass) soit de SiO₂. L'ensemble est déposé sur un support (substrat) en saphir soit en utilisant une colle appropriée, soit un collage de type van der Waals. Finalement le réflecteur de Bragg constitué de couches diélectriques (Silicium - Silice ou TiO₂) est déposé sur la structure précitée.

En ce qui concerne le collage type Van der Walls, on peut par exemple se référer au document :
(12) Appl. Phys. Lett 59(24) 9 Dec. 1991, p. 3159, "Van der Waals bonding of GaAs on Pd leads to a permanent, solid-phase-topotaxial, metallurgical bond", E. Yablonovitch et al.

En ce qui concerne la technique de réalisation et séparation de l'ensemble par rapport à son substrat d'origne avant dépôt sur un support en saphir, on peut se référer au document :
(13) Appl. Phys. Lett. 51(26), 28 Dec. 1987, "Extreme selectivity in the lift-off of epitaxial GaAs films", Eli Yablonovitch et al.

Bien entendu la présente invention n'est pas limitée au mode de réalisation particulier qui vient d'être décrit mais s'étend à toute variante conforme à son esprit.

En particulier, la présente invention n'est pas limitée à une configuration dite "repliée", comme représentée sur la figure 1, qui permet une meilleure gestion de l'encombrement lors de l'utilisation du composant dans une architecture de commutation optique rapide, dans laquelle la couche métallique 70 déposée sur la partie supérieure du dispositif sert à la fois de contact électrique et de miroir de forte réflectivité.

Le cas échéant, le dispositif peut comprendre deux réflecteurs de Bragg distribué, respectivement de part et d'autre de la zone à puits quantiques multiples.

Le dispositif photoréfractif rapide conforme à la présente invention utilise non seulement les propriétés optiques de la structure à puits quantiques multiples, mais encore les propriétés offertes par les semi-isolants (InP : Fe, InP : Ti) ou les inclusions pour piéger les charges. D'autre part le dispositif photoréfractif doit présenter un choix judicieux de puits et de barrières, tel que le transport vertical (perpendiculaire aux interfaces) soit efficace.

Par ailleurs, l'invention n'est pas limitée à l'utilisation de réflecteur de Bragg pour réaliser la couche réfléchissante 30. En effet, cette couche réfléchissante 30 peut être réalisée par tout autre moyen, par exemple par métallisation.

Aussi, on peut prévoir dans le cadre de l'invention, une cavité optique comprenant de part et d'autre de la zone active centrale 50 encadrée par les zones de piégeage 40 et 60 :
- deux réflecteurs 30, 70 formés respectivement d'un réflecteur de Bragg et d'une métallisation,
- deux réflecteurs 30, 70 formés chacun d'un réflecteur de Bragg,
- deux réflecteurs 30, 70 formés chacun d'une métallisation, ou encore
- deux réflecteurs 30, 70 formés respectivement d'une métallisation et d'un réflecteur de Bragg.

Dans le cas de mise en oeuvre de couches réfléchissantes à base de métallisation, la cohésion de l'ensemble est assurée de préférence par collage type Van der Walls.

Pour former une cavité optique, il est important que les deux réflecteurs 30, 70 soient assymétriques, c'est-à-dire possèdent des pouvoirs de réflexion différents. De préférence, l'un des réflecteurs possède une réflectivité supérieure à 90%, tandis que le second réflecteur présente une réflectivité comprise entre 45 et 85%.

## Revendications

1. Dispositif photoréfractif comprenant une zone optiquement active (50) formée de puits quantiques multiples et de zones de piégeage (40, 60) de part et d'autre de la zone optiquement active (50), **caractérisé par le fait qu'**il comprend deux réflecteurs (30, 70) disposés respectivement sur l'extérieur des zones de piégeage (40, 60) pour former une cavité optique.

2. Dispositif selon la revendication 1, **caractérisé par le fait que** les deux réflecteurs (30, 70) possèdent des pourcentages de réflexion différents.

3. Dispositif selon la revendication 2, **caractérisé par le fait que** l'un des réflecteurs a un pouvoir de réflexion supérieur à 90%, tandis que le second réflecteur possède une réflectivité comprise entre 45 et 85%.

4. Dispositif selon l'une des revendications 1 à 3, **caractérisé par le fait que** l'un au moins des réflecteurs est formé d'un réflecteur de Bragg distribué.

5. Dispositif selon l'une des revendications 1 à 4, **caractérisé par le fait que** les deux réflecteurs (30, 70) sont formés de réflecteurs de Bragg distribués.

6. Dispositif selon l'une des revendications 1 à 4, **caractérisé par le fait que** l'un au moins des réflecteurs (30, 70) est formé d'une métallisation.

7. Dispositif selon l'une des revendications 1 à 3, **caractérisé par le fait que** les deux réflecteurs (30, 70) sont formés de métallisation.

8. Dispositif selon l'une des revendications 6 ou 7, **caractérisé par le fait qu'**il est réalisé par mise en oeuvre d'un collage type Van der Waals.

9. Dispositif selon l'une des revendications 1 ou 2 prise en combinaison avec la revendication 4, **caractérisé par le fait que** la zone active de puits quantiques multiples (50) et le réflecteur de Bragg distribué (30) sont réalisés à l'aide des éléments P et As de la colonne V et/ou des éléments In et Ga de la colonne III.

10. Dispositif selon l'une des revendications 1 à 9 prise en combinaison avec la revendication, **caractérisé par le fait que** le réflecteur de Bragg distribué (30) est formé d'un empilement de deux semi-conducteurs ayant des différences d'indices.

11. Dispositif selon l'une des revendications 1 à 10, **caractérisé par le fait qu'**il comporte une structure Fabry-Pérot asymétrique.

12. Dispositif selon l'une des revendications 1 à 11, **caractérisé par le fait qu'**il comprend successivement :
- un substrat (10),
- une couche tampon (20),
- un réflecteur de Bragg distribué (30),
- une première couche de piégeage (40) appartenant aux zones de piégeage,
- la zone à puits quantiques multiples (50),
- une seconde couche de piégeage (60) appartenant aux zones de piégeage, et
- une métallisation supérieure (70).

13. Dispositif selon l'une des revendications 1 à 12, **caractérisé par le fait que** les zones de piégeage entre lesquelles la zone optiquement active (50) est prise en sandwich sont formée de zones de dopage respectivement n et p, de façon à appliquer un champ électrique perpendiculairement aux interfaces.

14. Dispositif selon l'une des revendications 1 à 13, **caractérisé par le fait que** la zone à puits quantiques multiples (50) comprend des puits formés de composés ternaires InGaAs accordés aux paramètres de maille d'un substrat.

15. Dispositif selon l'une des revendications 1 à 14, **caractérisé par le fait que** la largeur des puits de la zone optiquement active (50) est de l'ordre de 80Å.

16. Dispositif selon l'une des revendications 1 à 15, **caractérisé par le fait que** les puits de la zone optiquement active (50) sont formés de composés quaternaires GaInAsP.

17. Dispositif selon l'une des revendications 1 à 16, **caractérisé par le fait que** la zone optiquement active (50) est limiteé par des barrières formées de matériau InP.

18. Dispositif selon l'une des revendications 1 à 17, **caractérisé par le fait que** la zone optiquement actives (50) est limiteé par des barrières formées de matériau quaternaire GaInAsP.

19. Dispositif selon l'une des revendications 1 à 18, **caractérisé par le fait que** la zone optiquement active (50) est limitée par des barrières ayant une longueur d'onde de coupure à 1,18µm.

20. Dispositif selon l'une des revendications 1 à 19, **caractérisé par le fait que** la zone optiquement active (50) est limiteé par des barrières formées de matériau AlInAs.

21. Dispositif selon l'une des revendications 1 à 20, **caractérisé par le fait que** l'ensemble de la zone optiquement active (50) est dopé avec des éléments de transition 3d.

22. Dispositif selon l'une des revendications 1 à 21, **caractérisé par le fait que** l'ensemble de la zone optiquement active (50) est dopé avec des ions Fe, Ti.

23. Dispositif selon l'une des revendications 1 à 22 prise en combinaison avec la revendication 4, **caractérisé par le fait que** le réflecteur de Bragg distribué (30) est constitué de paires de couches alternées InP/matériau quaternaire, ce dernier ayant une longueur d'onde de coupure de l'ordre de 1,45µm.

24. Dispositif selon l'une des revendications 1 à 23 prise en combinaison avec la revendication 4, **caractérisé par le fait que** le réflecteur de Bragg distribué (30) présente une réflectivité au moins égale à 60%.

25. Dispositif selon l'une des revendications 1 à 24, **caractérisé par le fait que** les zones de piégeage (40, 60) sont formées de matériau InP semi-isolants.

26. Dispositif selon la revendication 25, **caractérisé par le fait que** les zones de piégeage (40, 60) sont formées de matériau InP dopé Fe pour piéger les électrons et de matériau InP dopé Fe, Si, pour piéger les trous.

27. Dispositif selon l'une des revendications 1 à 25, **caractérisé par le fait que** les zones de piégeage (40, 60) sont formées de matériau InP dopé Ti, Be pour piéger les trous.

28. Dispositif selon l'une des revendications 1 à 24, **caractérisé par le fait que** les zones de piégeage (40, 60) sont formées de boîtes quantiques auto-assemblées.

29. Dispositif selon l'une des revendications 1 à 28, **caractérisé par le fait qu'**il comporte des structures "mesa" avec contact métallique annulaire.

30. Dispositif selon la revendication 29, **caractérisé par le fait que** chaque élément formé par les structures "mesa" a un diamètre utile de l'ordre de 400µm.

31. Dispositif selon l'une des revendications 1 à 28, **caractérisé par le fait que** la zone optiquement active (50) est enrobée entre une ou deux couches de diélectrique.

32. Dispositif selon la revendication 31, **caractérisé par le fait que** la couche de diélectrique est constituée à base d'oxyde, de préférence soit de SOG, soit de SiO₂.

## Patentansprüche

1. Photorefraktive Vorrichtung, die eine optisch aktive Zone (50) umfaßt, die aus Mehrfach-Quantentöpfen gebildet ist, und aus Trapping-Zonen (40, 60) beiderseits der optisch aktiven Zone (50), **dadurch gekennzeichnet, daß** sie zwei Reflektoren (30, 70) umfaßt, die jeweils außerhalb der Trapping-Zonen (40, 60) angeordnet sind, um eine optische Kavität zu bilden.

2. Vorrichtung nach Anspruch 1, **dadurch gekennzeichnet, daß** die zwei Reflektoren (30, 70) unterschiedliche Reflektionsprozentsätze besitzen.

3. Vorrichtung nach Anspruch 2, **dadurch gekennzeichnet, daß** einer der Reflektoren ein Reflektionsvermögen großer als 90 %, während der zweite Reflektor eine Reflektivität zwischen 45 und 85 % hat.

4. Vorrichtung nach einem der Ansprüche 1 bis 3, **dadurch gekennzeichnet, daß** wenigstens einer der Reflektoren als ein verteilter Bragg-Reflektor ausgebildet ist.

5. Vorrichtung nach einem der Ansprüche 1 bis 4, **dadurch gekennzeichnet, daß** die beiden Reflektoren (30, 70) als verteilte Bragg-Reflektoren ausgebildet sind.

6. Vorrichtung nach einem der Ansprüche 1 bis 4, **dadurch gekennzeichnet, daß** wenigstens einer der Reflektoren (30, 70) aus einer Metallisierung gebildet ist.

7. Vorrichtung nach einem der Ansprüche 1 bis 3, **dadurch gekennzeichnet, daß** die beiden Reflektoren (30, 70) aus Metallisierungen gebildet sind.

8. Vorrichtung nach einem der Ansprüche 6 oder 7, **dadurch gekennzeichnet, daß** sie durch Einsetzen einer Van der Waals-Klebung realisiert ist.

9. Vorrichtung nach einem der Ansprüche 1 oder 2, in Kombination mit Anspruch 4, **dadurch gekennzeichnet, daß** die aktive Zone aus Mehrfach-Quantentöpfen (50) und der verteilte Bragg-Reflektor (30) mit Hilfe von Elementen P und As aus der V. Spalte und/oder Elementen In und Ga aus der III. Spalte realisiert sind.

10. Vorrichtung nach einem der Ansprüche 1 bis 9, in Kombination mit Anspruch 4, **dadurch gekennzeichnet, daß** der verteilte Bragg-Reflektor (30) aus einer Stapelung zweier Halbleiter mit unterschiedlichen Brechungsindizes gebildet ist.

11. Vorrichtung nach einem der Ansprüche 1 bis 10, **dadurch gekennzeichnet, daß** sie eine asymmetrische Fabry-Pérot Struktur umfaßt.

12. Vorrichtung nach einem der Ansprüche 1 bis 11, **dadurch gekennzeichnet, daß** sie nacheinander folgendes umfaßt:
- ein Substrat (10),
- eine Pufferschicht (20),
- einen verteilten Bragg-Reflektor (30),
- eine erste Trapping-Schicht (40), die zu den Trapping-Zonen gehört,
- die Zone aus den Mehrfach-Quantentöpfen (50),
- eine zweite Trapping-Schicht (60), die zu den Trapping-Zonen gehört, und
- eine obere Metallisierung (70).

13. Vorrichtung nach einem der Ansprüche 1 bis 12, **dadurch gekennzeichnet, daß** die Trapping-Zonen, zwischen denen die optisch aktive Zone (50) liegt, aus n- bzw. p-dotierten Zonen gebildet sind, derart, daß ein elektrisches Feld senkrecht zu den Grenzflächen angelegt wird.

14. Vorrichtung nach einem der Ansprüche 1 bis 13, **dadurch gekennzeichnet, daß** die Zone aus Mehrfach-Quantentöpfen (50) Töpfe umfaßt, die aus tertiären In-GaAs-Verbindungen gebildet sind, die mit den Gitterparametern eines Substrates abgestimmt sind.

15. Vorrichtung nach einem der Ansprüche 1 bis 14, **dadurch gekennzeichnet, daß** die Breite der Töpfe der optisch aktiven Zone (50) in der Größenordnung von 80 Å ist.

16. Vorrichtung nach einem der Ansprüche 1 bis 15, **dadurch gekennzeichnet, daß** die Töpfe der optisch aktiven Zone (50) aus quaternären GaInAsP-Verbindungen gebildet sind.

17. Vorrichtung nach einem der Ansprüche 1 bis 16, **dadurch gekennzeichnet, daß** die optisch aktive Zone (50) durch Barrieren begrenzt ist, die aus einem InP-Material gebildet sind.

18. Vorrichtung nach einem der Ansprüche 1 bis 17, **dadurch gekennzeichnet, daß** die optisch aktive Zone (50) durch Barrieren begrenzt ist, die aus quaternären GaInAsP-Material gebildet sind.

19. Vorrichtung nach einem der Ansprüche 1 bis 18, **dadurch gekennzeichnet, daß** die optisch aktive Zone (50) durch Barrieren begrenzt ist, die eine Grenzwellenlänge von 1,18 µm haben.

20. Vorrichtung nach einem der Ansprüche 1 bis 19, **dadurch gekennzeichnet, daß** die optisch aktive Zone (50) durch Barrieren begrenzt ist, die aus einem AlInAs-Material gebildet sind.

21. Vorrichtung nach einem der Ansprüche 1 bis 20, **dadurch gekennzeichnet, daß** die Einheit der optisch aktiven Zone (50) mit 3d-Übergangselementen dotiert ist.

22. Vorrichtung nach einem der Ansprüche 1 bis 21, **dadurch gekennzeichnet, daß** die Anordnung der optisch aktiven Zone (50) mit Ionen Fe, Ti dotiert ist.

23. Vorrichtung nach einem der Ansprüche 1 bis 22, in Kombination mit Anspruch 4, **dadurch gekennzeichnet, daß** der verteilte Bragg-Reflektor (30) aus Paaren abwechselnder Schichten aus InP/quaternärem Material gebildet ist, wobei das letztere eine Grenzwellenlänge in der Größenordnung von 1,45 µm hat.

24. Vorrichtung nach einem der Ansprüche 1 bis 23, in Kombination mit Anspruch 4, **dadurch gekennzeichnet, daß** der verteilte Bragg-Reflektor (30) eine Reflektivität von wenigstens gleich 60 % aufweist.

25. Vorrichtung nach einem der Ansprüche 1 bis 24, **dadurch gekennzeichnet, daß** die Trapping-Zonen (40, 60) aus einem halbisolierenden InP-Material gebildet sind.

26. Vorrichtung nach Anspruch 25, **dadurch gekennzeichnet, daß** die Trapping-Zonen (40, 60) aus einem mit Fe dotierten InP-Material zum Einfangen der Elektronen und aus einem mit Fe, Si dotierten InP-Material zum Einfangen der Löcher gebildet sind.

27. Vorrichtung nach einem der Ansprüche 1 bis 25, **dadurch gekennzeichnet, daß** die Trapping-Zonen (40, 60) aus einem mit Ti, Be dotierten InP-Material zum Einfangen der Löcher gebildet sind.

28. Vorrichtung nach einem der Ansprüche 1 bis 24, **dadurch gekennzeichnet, daß** die Trapping-Zonen (40, 60) aus selbstorganisierten Quantenpunkten gebildet sind.

29. Vorrichtung nach einem der Ansprüche 1 bis 28, **dadurch gekennzeichnet, daß** sie "Mesa"-Strukturen mit ringförmigem metallischen Kontakt umfaßt.

30. Vorrichtung nach Anspruch 29, **dadurch gekennzeichnet, daß** jedes durch die "Mesa"-Strukturen gebildetes Element einen Nutzdurchmesser in der Größenordnung von 400 µm aufweist.

31. Vorrichtung nach einem der Ansprüche 1 bis 28, **dadurch gekennzeichnet, daß** die optisch aktive Zone (50) zwischen einer oder zwei dielektrischen Schichten eingehüllt ist.

32. Vorrichtung nach Anspruch 31, **dadurch gekennzeichnet, daß** die dielektrische Schicht auf einer Oxidbasis, vorzugsweise entweder aus SOG oder SiO₂ gebildet ist.

## Claims

1. A photorefractive device comprising an optically active zone (50) formed by multiple quantum wells and trapping zones (40, 60) on either side of the optically active zone (50), the device being **characterized by** the fact that it comprises two reflectors (30, 70) disposed respectively on the outsides of the trapping zones (40, 60) to form an optical cavity.

2. A device according to claim 1, **characterized by** the fact that the two reflectors (30, 70) possess different reflection percentages.

3. A device according to claim 2, **characterized by** the fact that one of the reflectors has reflection power greater than 90%, while the second reflector possesses reflectivity lying in the range 45% to 85%.

4. A device according to any one of claims 1 to 3, **characterized by** the fact that at least one of the reflectors is formed by a distributed Bragg reflector.

5. A device according to any one of claims 1 to 4, **characterized by** the fact that both reflectors (30, 70) are formed by distributed Bragg reflectors.

6. A device according to any one of claims 1 to 4, **characterized by** the fact that at least one of the reflectors (30, 70) is formed by metallization.

7. A device according to any one of claims 1 to 3, **characterized by** the fact that both reflectors (30, 70) are formed by metallization.

8. A device according to claim 6 or claim 7, **characterized by** the fact that it is made by implementing Van der Waals type bonding.

9. A device according to claim 1 or claim 2 taken in combination with claim 4, **characterized by** the fact that the multiple quantum well active zone (50) and the distributed Bragg reflector (30) are made using the elements P and As of column V and/or the elements In and Ga of column III.

10. A device according to any one of claims 1 to 9 taken in combination with claim 4, **characterized by** the fact that the distributed Bragg reflector (30) is formed by a stack of two semiconductors having different refractive indices.

11. A device according to any one of claims 1 to 10, **characterized by** the fact that it includes an asymmetrical Fabry-Perot structure.

12. A device according to any one of claims 1 to 11, **characterized by** the fact that it comprises in succession:
- a substrate (10);
- a buffer layer (20);
- a distributed Bragg reflector (30);
- a first trapping layer (40) belonging to the trapping zone;
- the multiple quantum well zone (50);
- a second trapping layer (60) belonging to the trapping zone; and
- top metallization (70).

13. A device according to any one of claims 1 to 12, **characterized by** the fact that the trapping zones between which the optically active zone (50) is sandwiched are formed of zones having n and p doping respectively so as to apply an electric field perpendicularly to the interfaces.

14. A device according to any one of claims 1 to 13, **characterized by** the fact that the multiple quantum well zone (50) has wells made of InGaAs ternary compounds matched to the lattice constants of a substrate.

15. A device according to any one of claims 1 to 14, **characterized by** the fact that the width of the wells of the optically active zone (50) is about 80 Å.

16. A device according to any one of claims 1 to 15, **characterized by** the fact that the wells of the optically active zone (50) are formed by GalnAsP quaternary compounds.

17. A device according to any one of claims 1 to 16, **characterized by** the fact that the optically active zone (50) is defined by barriers made of InP material.

18. A device according to any one of claims 1 to 17, **characterized by** the fact that the optically active zone (50) is defined by barriers made of GalnAsP quaternary material.

19. A device according to any one of claims 1 to 18, **characterized by** the fact that the optically active zone (50) is defined by barriers having a cutoff wavelength of 1.18 µm.

20. A device according to any one of claims 1 to 19, **characterized by** the fact that the optically active zone (50) is defined by barriers made of AlInAs material.

21. A device according to any one of claims 1 to 20, **characterized by** the fact that the entire optically active zone (50) is doped with 3d transition elements.

22. A device according to any one of claims 1 to 21, **characterized by** the fact that the entire optically active zone (50) is doped with Fe, Ti ions.

23. A device according to any one of claims 1 to 22, taken in combination with claim 4, **characterized by** the fact that the distributed Bragg reflector (30) is constituted by pairs of alternating layers of InP and quaternary material, the quaternary material having a cutoff wavelength of about 1.45 µm.

24. A device according to any one of claims 1 to 23, taken in combination with claim 4, **characterized by** the fact that the distributed Bragg reflector (30) presents reflectivity of not less than 60%.

25. A device according to any one of claims 1 to 24, **characterized by** the fact that the trapping zones (40, 60) are made of semi-insulating InP material.

26. A device according to claim 25, **characterized by** the fact that the trapping zones (40, 60) are made of Fe-doped InP material for trapping electrons and of Fe-, Si-doped InP material for trapping holes.

27. A device according to any one of claims 1 to 25, **characterized by** the fact that the trapping zones (40, 60) are made of Ti-, Be-doped InP material for trapping holes.

28. A device according to any one of claims 1 to 24, **characterized by** the fact that the trapping zones (40, 60) are formed of self-assembled quantum dots.

29. A device according to any one of claims 1 to 28, **characterized by** the fact that it comprises "mesa" structures with annular metal contact.

30. A device acorn to claim 29, **characterized by** the fact that each element formed by a "mesa" structure has a working diameter of about 40 µm.

31. A device according to any one of claims 1 to 28, **characterized by** the fact that the optically active zone (50) is coated between one or two dielectric layers.

32. A device according to claim 31, **characterized by** the fact that the dielectric layer is made on the basis of an oxide, preferably of SOG or of SiO₂.
